Europäisches Patentamt

European Patent Office

Office européen des brevets

(19)

(11) EP 0 432 731 B1

(12) EUROPEAN PATENT SPECIFICATION

(45) Date of publication and mention
of the grant of the patent:
**20.03.1996  Bulletin 1996/12**

(51) Int Cl.⁶: **G11B 7/24**, G11B 7/00

(21) Application number: 90123820.4

(22) Date of filing: **11.12.1990**

(54) **Information recording medium and information recording and reproducing method and apparatus**

Aufnahmedatenträger und Verfahren und Gerät zur Aufnahme und Wiedergabe von Daten

Support d'enregistrement d'information et méthode et appareil d'enregistrement et de reproduction d'information

(84) Designated Contracting States:
DE FR GB

(30) Priority: **11.12.1989 JP 318776/89**

(43) Date of publication of application:
**19.06.1991  Bulletin 1991/25**

(73) Proprietors:
• **HITACHI, LTD.**
  **Chiyoda-ku, Tokyo 101 (JP)**
• **HITACHI MAXELL, LTD.**
  **Osaka-fu 567 (JP)**

(72) Inventors:
• **Okamine, Shigenori**
  **Kodaira-shi, Tokyo 187 (JP)**
• **Nishida, Tetsuya**
  **Hachioji-shi, Tokyo 192 (JP)**

• **Horigome, Shinkichi**
  **Tachikawa-shi, Tokyo 190 (JP)**
• **Terao, Motoyasu**
  **Nishitama-gun, Tokyo 190-01 (JP)**
• **Ohta, Norio**
  **Kitasoma-gun, Ibaraki-ken 302-01 (JP)**

(74) Representative: **Patentanwälte**
  **Beetz - Timpe - Siegfried Schmitt-Fumian - Mayr**
  **Steinsdorfstrasse 10**
  **D-80538 München (DE)**

(56) References cited:
**EP-A- 0 289 352**

• **PATENT ABSTRACTS OF JAPAN vol. 9, no. 79 (P-347)(1802), 9 April 1985; & JP - A - 59210543**
• **PATENT ABSTRACTS OF JAPAN vol. 12, no. 62 (P-670)(2909), 25 February 1988; & JP-A-62 204 442**
• **PATENT ABSTRACTS OF JAPAN vol. 12, no. 417 (P- 782)(3264), 07 November 1988; & JP - A - 63153737**

## Description

The present invention relates to an information recording system and a method for recording and reproducing information according to the preambles of independent claims 1 and 10. Such a system and such a method are known from JP-A-59-210543. The invention further relates to an apparatus for recording information comprising a medium as mentioned above. Such an apparatus is suitable for handling a large amount of information with a high recording density. More particularly, the present invention relates to an information recording medium and an information recording and reproducing method and apparatus which are used to record and reproduce computer code data, image information, and music information by means of an energy beam (such as laser beam).

An information recording medium used to record and reproduce information by means of an energy beam has been put to practical use in the form of optical disk which employs laser light as an energy beam. This type of information recording medium records information by the aid of optically readable recorded marks which are formed when the recording medium is irradiated with an energy beam.

There are three known types, namely (1) one which records information by the aid of dots formed on a film of low-melting metal (such as Bi and Te) by melting and vaporization, (2) one which records information by the aid of phase change such as crystallization and amorphization, and (3) one which records information by forming an alloy from two kinds of thin films laminated one over the other by diffusion between the two layers. All of them are based on the principle that the desired change is made when the recording film is irradiated with an energy beam so that a very small area of the recording film is heated. There is another type of recording medium which records information by the aid of an organic dye film which undergoes optical change upon absorption of an energy beam of specific wavelength.

Information reproduction is accomplished by using the change in optical constants that takes place in the recording dots formed by melting and vaporization, phase change, or alloying. Since the recording dot is different from the other part (in which no recording is made) in the amount of transmitted or reflected light, it is possible to reproduce information by detecting such difference.

In the meantime, the recent sophisticated computers and other information machines need an information recording medium and an information recording and reproducing method and apparatus which are suitable for rapidly handling a large amount of information with a high recording density. To meet this need, there have been proposed a new recording medium having multiple recording films unlike the conventional one having a single recording film, and a recording method capable of multiple recording and multi-valued recording.

Japanese Patent Laid-open No. 59-210543 (1984) discloses a method for multiple recording by means of a recording film composed of transmitting layers and absorbing layers arranged one over another. (The former transmits laser light and the latter absorbs laser light.) The individual absorbing layers perform information recording and reproduction independently upon irradiation with laser light variably focussed on them. The multiple recording increases the recording density of a recording medium.

Japanese Patent Laid-open No. 62-204442 (1987) discloses a method for recording information by means of a recording film which is composed of multiple layers each having a different composition. According to this method, information recording is achieved by the crystallization and amorphization of the alloy that take place in the recording film. The recording film is composed of Ge layers and Te layers laminated one over another. This recording medium records both erasable information and unerasable information utilizing the fact that when the recording film undergoes phase change (i.e., crystallization or amorphization), it changes in reflectance.

Japanese Patent Laid-open No. 63-153737 (1988) discloses a method for multi-valued recording which utilizes a recording film which varies in reflectance depending on the three or more different states of crystallization it takes on. According to this method, the recording and reproduction of multi-valued information are based on the fact that the different values of reflectance represent the different pieces of information. Thus this method makes it possible to increase the recording density.

The above-mentioned prior art technology has the following disadvantages because no consideration is given at all to effectively utilizing the multiple interference of energy beam that takes place in the multi-layered recording film at the time of information recording and reproduction.

(1) In the case of conventional recording medium, the reproduced signals have a low degree of modulation and the recording dots representing the intermediate state of change cannot be formed under good control. Therefore, it involves difficulties in multi-valued recording and analog recording.

(2) In the case of conventional multiple recording, it is necessary that the absorbing layers to absorb energy beams of the same wavelength be arranged at intervals greater than the depth of focus for the energy beam. Usually, the intervals of the absorbing layers should be several micrometers. Such intervals increase the total thickness of the recording films, which in turn leads to a longer time it takes to produce the recording medium. Moreover, it is also necessary that the transmitting layer be made of a fast-depositing organic material, if the recording film is to be produced by vapor deposition or sputtering which is suitable for mass production.

In the case where the recording medium has within the depth of focus a plurality of absorbing layers which differ in absorption characteristics for an energy beam having a plurality of wavelengths, it is necessary that the absorbing layers be made from specific materials so that one absorbing layer transmits an energy beam which another absorbing layer absorbs. This means that the materials for the recording film are limited to specific organic materials.

In addition, this recording medium needs a provision to change the focussing point of an energy beam. In other words, it needs a multiplicity of laser light sources for different wavelengths and a multiplicity of focussing lenses which differ in numerical aperture. This leads to the complexity of the recording and reproducing apparatus.

(3) In the case of the conventional recording medium which performs recording by the aid of crystallization and amorphization that take place in the multi-layered recording film, it is necessary that each of the films have a specific composition and thickness so that the films easily form an alloy upon heating, thereby bringing about crystallization and amorphization.

(4) In the case of the conventional recording medium which performs multi-valued recording by utilizing the fact that reflectance varies depending on the crystalline structure, the kind of the crystalline structure is limited by the composition of the recording film.

It is the object of the present invention to provide an information recording system and an information recording and reproducing method and apparatus which is suitable for multi-valued recording and analog recording.

This object is solved in accordance with the features of the independent claims. Dependent claims are directed on preferred embodiments of the invention.

An information recording medium capable of information recording and reproduction upon irradiation with an energy beam comprises two or more energy beam absorbing layers which are formed at different positions across the thickness within the depth of focus of the energy beam, said energy beam absorbing layers recording information according to their respective absorptions. The depth of focus of energy beam is defined as the distance the energy beam travels without a great change in convergence diameter and without a substantial loss of energy per unit area under such conditions that the irradiated energy beam is not absorbed by the recording film. For example, the depth of focus is regarded as $\lambda/(NA)^2$, if an energy beam having a wavelength of $\lambda$ converges through a focussing lens having a numerical aperture of NA. Incidentally, the energy beam absorbing layer denotes a layer which absorbs an energy beam and brings about an optical change in the recording film.

In the case where the recording film is composed solely of two or more energy beam absorbing layers, they should differ from one another in refractive index, so that the energy beam incident on the recording film undergoes multiple interference in the recording film. In the case where the recording film has other layers in addition to the energy absorbing layers, the energy absorbing layers may be the same or different in refractive index.

Said energy beam absorbing layers hold an energy beam transmitting layer between them.

The energy beam transmitting layer interposed between the energy beam absorbing layers permits the energy beam to reach the second energy beam absorbing layer without causing a great loss to the energy beam even when the energy beam absorbing layers are arranged at a large interval. This offers an advantage of making it possible to provide a multiplicity of energy beam absorbing layers.

An information recording medium as above may further comprise an energy beam transmitting layer formed on the side on which the energy beam is incident or on the side opposite to the side on which the energy beam is incident.

It is desirable to form this energy beam transmitting layer in the case where it is necessary to adjust the reflectance of the recording medium to a desired value or it is necessary to bring about optical change through mutual diffusion between the energy beam absorbing layer and the energy beam transmitting layer. In addition, this energy beam transmitting layer offers an advantage of protecting the energy beam absorbing layer during the production and handling of the information recording medium.

In medium as above the energy beam absorbing layers may be arranged such that the adjacent energy beam absorbing layers differ in energy absorption or the energy beam absorbing layers differ in thickness such that the adjacent energy beam absorbing layers differ in energy absorption. In the case where thicknesses of absorbing layers are controlled, the energy beam absorbing layer for high absorption should be thick, and the energy beam absorbing layer for low absorption should be thin. Alternatively, both the position and thickness of the energy beam absorbing layers should be properly established to meet the above-mentioned requirements.

A medium as above may comprise a plurality of energy beam absorbing layers which differ in melting point or crystallization temperature. This is advantageous for the recording dot smaller than the beam spot diameter and also for the multi-valued recording.

A medium as defined above may further comprise an energy beam reflecting layer formed on the side opposite to the that side of the recording film on which the energy beam is incident.

The energy beam reflecting layer should preferably be a high reflectance film made of Al, Au, Pt, etc. or an alloy thereof. In the case where the recording medium has the energy beam reflecting layer, it is desirable that a transmitting layer be interposed between the reflecting layer and the absorbing layer to prevent heat from escaping from the absorbing layer to the reflecting layer. The energy beam reflecting layer offers an advantage of preventing the energy beam from passing through the recording film, lowering the recording sensitivity and reducing the degree of reproducing modulation.

The energy beam reflecting layer offers an additional advantage of making more effective the multiple interference of the energy beam that takes place in the recording film, thereby increasing the degree of modulation of reproducing signals and making it possible to adjust the reflectance of the recording medium to a desired value.

In a medium as defined above the energy beam transmitting layer may have a thickness $d$ defined below.

$$\lambda/(4n) \leq d \leq 2\lambda/n$$

where $\lambda$ denotes the wavelength of the incident energy beam and $n$ denotes the refractive index of the energy beam transmitting layer interposed between the energy beam absorbing layers. With $d$ smaller than $\lambda/(4n)$, the energy beam transmitting layer does not separate the energy beam absorbing layer thermally. With $d$ greater than $2\lambda/n$, the energy beam transmitting layer makes the recording film too thick to be made within a reasonable length of time.

The energy beam transmitting layer should preferably have a thickness $d$ in the range defined below.

$$\lambda/(4n) \leq d \leq \lambda/n$$

However, this is not applied to the energy beam transmitting layer formed between the substrate and the energy beam absorbing layer or between the energy beam absorbing layer and the energy beam reflecting beam.

The means mentioned in 1 to 7 above may have the energy beam transmitting layers, absorbing layers, (and reflecting layers) whose optimum thickness can be calculated from the wavelength of the energy beam used for recording and reproduction and the optical constants (complex index of refraction, $n$-$ik$) of the individual transmitting layers, absorbing layers, (and reflecting layers).

In a medium as defined above the energy absorbing layer may contain at least one kind selected from semi-metallic elements (such as Se, Te, As, Sb, and Ge) and metallic elements (such as Bi, Sn, Pb, Al, Ga, In, and Tl) and compounds and alloys thereof.

Examples of the alloys include $Sb_2Te_3$, $As_2Se_3$, $TeSe_2$, and $Bi_2Te_3$. The compounds and alloys to be prepared by vapor deposition or sputtering need not have the stoichiometric composition shown above. The alloys may be ternary or multicomponent ones. These materials are suitable because of their low thermal conductivity and low melting point and their ability to change easily upon irradiation with an energy beam.

In a medium as defined above the energy beam transmitting layer may be made of a dielectric material which is at least one kind of oxides (such as $SiO_2$, $Al_2O_3$, and $ZrO_2$), nitrides (such as $Si_3N_4$ and AlN), sulfides (such as ZnS), selenides (such as $Sb_2Se_3$ and $In_2Se_3$), and carbides (such as SiC). For a recording medium designed to form recording marks by the alloying reaction, a selenide is preferable because of its ability to form an alloy easily by interlayer diffusion with the energy beam absorbing layer.

The energy beam transmitting layer should have an extinction coefficient (k) smaller than 0.5, preferably smaller than 0.1. The energy beam absorbing layer should have an extinction coefficient (k) greater than 1, preferably from 3 to 6. With an excessively small extinction coefficient, the energy beam absorbing layer does not absorb the energy beam. With an excessively great extinction coefficient, the energy beam transmitting layer does not permit the energy beam to pass easily and hence makes it difficult to provide a plurality of energy beam absorbing layers. Incidentally, the energy beam transmitting layers and the energy beam absorbing layers should be combined such that they form recording dots upon irradiation with an energy beam.

In a method for recording and reproducing information by applying an energy beam to an information recording medium having two or more energy beam absorbing layers which are formed at different positions across the thickness within the depth of focus of the energy beam, said energy beam absorbing layers holding an energy beam transmitting layer between them, the information recording is accomplished in response to the energy beam power which varies or the pulse waveform which varies, or both. The pulse waveform depends on the duration of irradiation and the power level which varies from time to time.

This information recording method employs a single energy beam.

In a method as above the change may be made at different positions in the direction across the thickness of the recording film in response to the energy beam power which varies or the pulse waveform which varies, or both.

For example, when the recording beam has a low power, the alloying occurs in the first absorbing layer, and when the recording beam has a high power, the alloying occurs in the second absorbing layer.

In a method as above the change may be made in different modes of the recording film in response to the energy beam power which varies or the pulse waveform which varies, or both.

For example, the above-mentioned information recording medium forms the recording dots by the aid of alloying as well as phase change. When the recording beam has a low power, the alloying occurs, and when the recording beam has a high power, the amorphization occurs.

Incidentally, the reaction mode by which the recording dots are formed is not specifically limited; however, the alloying reaction is preferable which occurs through the mutual diffusion between the transmitting layer and the absorbing layer, or the phase change (such as crystallization and amorphization) is preferable which occurs in the transmitting layer or absorbing layer. Nevertheless, in the case of the information recording medium for RAW (read after write), amorphization (which takes place rapidly) is preferable to crystallization.

There is not always a clear cut between the mutual diffusion and the phase change. It is known that the rate of phase change depends greatly on the composition of the recording film, and the phase change reaction is easily promoted by the mutual diffusion. There may be a reaction mode in which the mutual diffusion and the phase change take place simultaneously.

In a method as above the information reproduction may be accomplished by dividing the level of reproducing signals into three or more different zones so that the individual zones correspond to three or more values of information.

The following method is used to divide the level of reproducing signals into three or more different zones. Firstly, the first standard level is established. Secondly, the second standard level which is higher than the first standard level is established. The first zone covers the range lower than the first standard level. The second zone covers the range higher than the first standard level and lower than the second standard level. The third zone covers the range higher than the second standard level and lower than the third standard level. The readout signal whose level is in the first zone represents "0". The readout signal whose level is in the second zone represents "1". The readout signal whose level is in the third zone represents "2".

In a method as above the information reproduction may be accomplished by dividing the waveform of readout signals into three or more different patterns so that the individual patterns correspond to three or more values of information.

The following method is used to divide the waveform of readout signals into three or more different patterns. Firstly, the standard level of readout signals is established. Secondly, change in the level of readout signals is observed for a prescribed period of time. The waveform which changes from the standard level to the lower level is designated as the first pattern. The waveform which changes from the standard level to the higher level is designated as the second pattern. The waveform which changes from the standard level to the lower level and then to a level higher than the standard level is designated as the third pattern. The waveform which changes from the standard level to the higher level and then to a level lower than the standard level is designated as the fourth pattern. The readout signal whose waveform is the first pattern represents "0". In the same token, the second pattern represents "1", the third pattern represents "2", and the fourth pattern represents "3".

An apparatus for recording information has an information recording medium as above and comprises a means to encode binary recording signals into ternary or multi-valued signals and a means to change the power or pulse width or both of the irradiating energy beam in accordance with the multi-valued recording signals.

An apparatus for reproducing information has an information recording medium as above , means to detect the level of the readout signals, a means to generate timing for the detection of the level of readout signals, and a means to reproduce ternary or multi-valued signals and decode the multi-valued signals into binary signals.

The apparatus defined above are compatible with the conventional recording-reproducing apparatus and other machines which handle binary information. Therefore, it is easy to use for users accustomed to the conventional apparatus.

As mentioned above, the information recording medium of the present invention has a recording film composed of two or more energy beam absorbing layers which are formed at different positions across the thickness within the depth of focus of the energy beam. When an energy beam is applied to this recording film, the energy beam produces the effect of multiple interference, which in turn causes the energy to be absorbed differently across the thickness of the recording film.

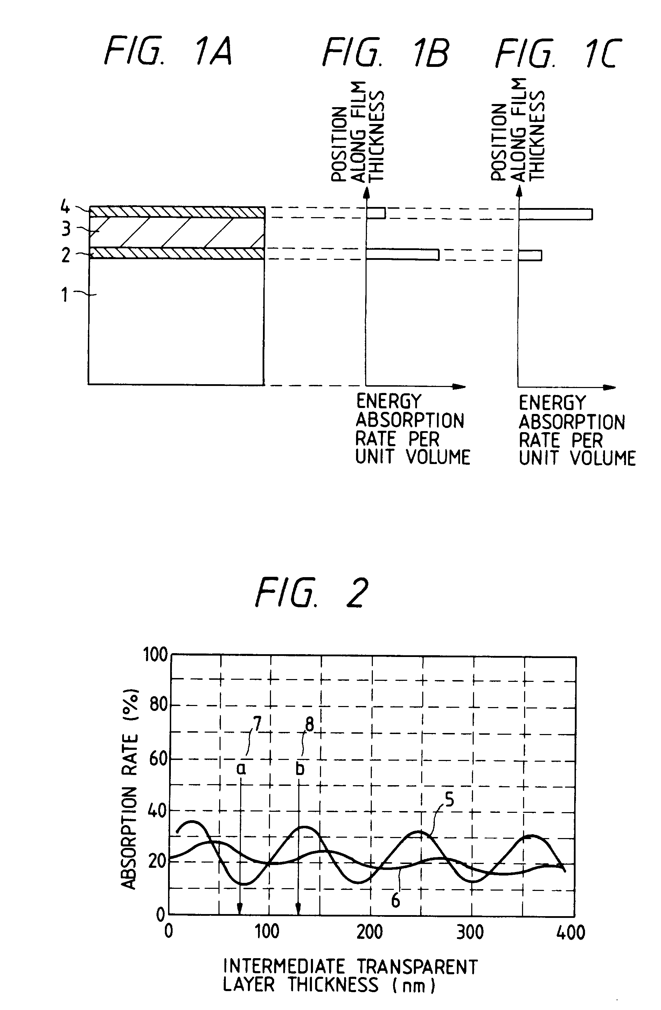

An embodiment (Example 1) of the present invention is briefly explained in the following with reference to Figs. 1A, 1B, and 1C. Fig. 1A is a longitudinal sectional view of the information recording medium pertaining to the present invention. Figs. 1B and 1C show the relationship between the energy absorption rate per unit volume (on the abscissa) and the position along the thickness of the recording film, measured from the surface on which the energy beam is incident (on the ordinate). Upon irradiation with an energy beam, changes take place in each absorbing layer depending on the amount of energy absorbed. In the case of Figs. 1B and 1C, reactions take place first in the layer where the absorption rate is high. (In this case reactions are induced by temperature rise and the amount of heat generated is proportional to the absorption rate.) Therefore, there is an event in which the degree of reaction varies from one absorption layer to another, or there is an event in which reactions take place only in one absorption layer. This situation can be utilized to record an intermediate state which is required for multi-valued recording and analog recording. The similar effect is expected in the case where there are more absorbing layers and transmitting layers.

According to the above-mentioned structure, the energy beam absorbing layers are separated from each other by the energy beam transmitting layer. This structure prevents the thermal interference between the absorbing layers which would otherwise occur at the time of irradiation with an energy beam for recording.

The recording medium of the present invention permits the absorption rate of energy beam to be controlled across the thickness at the time of irradiation with an energy beam. Therefore, it is possible to determine the position where the optical constants change such that the degree of modulation of reproducing signals is highest.

The recording medium of the present invention may have a reflecting layer which prevents the energy beam from penetrating the recording film. Owing to this reflecting layer, the recording medium does not decrease in recording sensitivity and decrease in multiple interference effect. In addition, the recording medium of the present invention may have a transmitting layer between the absorbing layer and the reflecting layer. This transmitting layer prevents heat from escaping directly from the absorbing layer to the reflecting layer even in the case where the reflecting layer is made of a thermally conductive metal.

When the recording dots are irradiated with a reproducing beam, the surface of the recording film changes in not only reflectance but also phase. This gives a high degree of signal modulation because the reflected beam from the inside of the recording dot interferes with the reflected beam from the outside of the recording pit, even when the diameter of the recording dot is smaller than that of the reproducing beam.

Fig. 1A is a longitudinal sectional view showing the laminated structure of the information recording medium pertaining to an embodiment of the present invention.

Figs. 1B and 1C are schematic diagrams showing how energy absorption takes place in each absorbing layer of the information recording medium shown in Fig. 1A.

Fig. 2 is a diagram showing the relationship between the thickness of the intermediate transparent layer and the energy absorption rate in each absorbing layer of the information recording medium shown in Fig. 1.

Figs. 3 and 4 are diagrams each showing the relationship between the thickness of the transparent layer and the reflectance and energy absorption rate in each absorbing layer of the information recording medium shown in Fig. 1, with the transparent layer being on the side on which the laser beam is incident or on the side opposite to the side on which the laser beam is incident.

Fig. 5 is a longitudinal sectional view showing the laminated structure of the information recording medium pertaining to an embodiment of the present invention.

Figs. 6A and 6B are schematic diagrams showing how the energy absorption rate varies with distance across the thickness from the surface of the substrate in each absorbing layer of the information recording medium shown in Fig. 5.

Fig. 7 is a diagram showing the dependence of the waveform of recording signals on the power of recording laser for the information recording medium shown in Fig. 5

Figs. 8A, 8B, and 8C are diagrams showing the dependence of the level of readout signals on the power of recording laser for the information recording medium shown in Fig. 5.

Figs. 9A and 9B are diagrams showing the dependence of the level of the readout signals on the pulse width of recording laser for the information recording medium shown in Fig. 5.

Fig. 10 is a diagram showing the combination of the pulse waveforms of recording laser used in the recording method pertaining to an embodiment of the present invention.

Fig.11 is a diagram showing the combination of the patterns of reproducing waveforms used in the reproducing method pertaining to an embodiment of the present invention.

Fig.12 is a diagram showing the recording-reproducing apparatus pertaining to an embodiment of the present invention.

Example 1

An information recording medium as shown in Fig. 1A was designed by optical calculations as follows: This recording medium is composed of a substrate 1 and a first absorbing layer 2, an intermediate transmitting layer 3, and a second absorbing layer 4 laminated consecutively one over another on the substrate. The substrate is made of polycarbonate. The first and second absorbing layers are made of Bi. The intermediate transmitting layer is made of $Sb_2Se_3$. Irradiation with an energy beam is accomplished through the substrate.

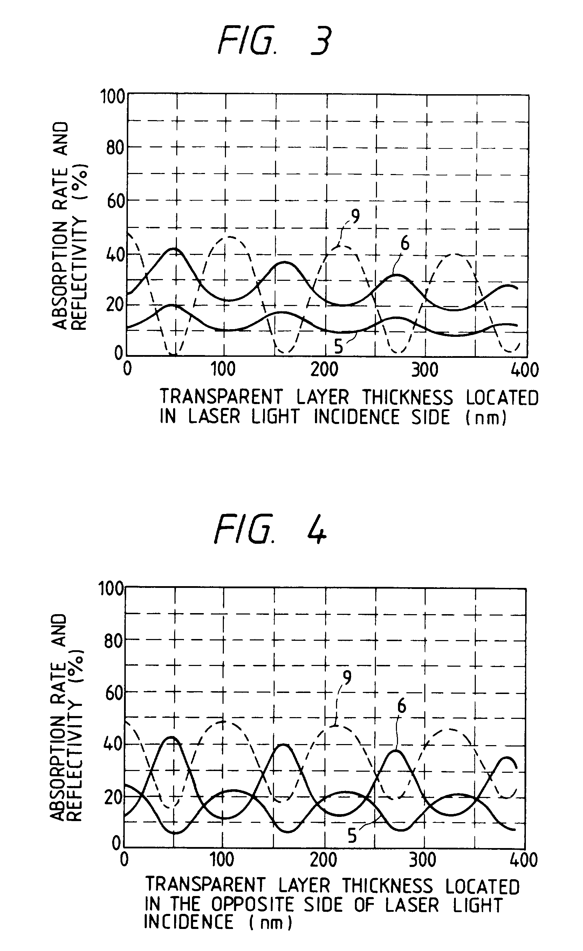

Fig. 2 shows the results of the optical calculations which were performed on an assumption that the first and second absorbing layers are 10 nm thick, the substrate, Bi layer, and $Sb_2Se_3$ layer have a complex index of refraction of 1.56-0.0$i$, 2.3-4.9$i$, and 3.7-0.06$i$, respectively, and the energy beam has a wavelength of 830 nm.

The energy absorption rate 5 of the first absorbing layer and the energy absorption rate 6 of the second absorbing layer vary depending on the thickness of the intermediate transmitting layer, as shown in Fig. 2. This can be utilized to make the absorption rate of the first absorbing layer higher or lower than that of the second absorbing layer. If the thickness of the intermediate transmitting layer has a value 7 (70 nm) indicated by $a$, the ratio between the absorption rate of the first absorbing layer and the absorption rate of the second absorbing layer is 1:2. Likewise, if the thickness of the intermediate transmitting layer has a value 8 (130 nm) indicated by $b$, the ratio is 1.5:1. These ratios are shown in Fig. 1B and Fig. 1C, respectively.

Incidentally, the above-mentioned experiment was carried out by changing the thickness of the intermediate transmitting layer; however, the same result as above will be obtained when experiments are carried out by changing the complex index of refraction of the intermediate transmitting layer while keeping constant the thickness of the intermediate transmitting layer. It is possible to change the complex index of refraction of the intermediate layer by using a different manufacturing condition or composition.

Example 2

An information recording medium was designed as follows: This recording medium is similar to that in Example 1 but has a transmitting layer on that side of the absorbing layer on which an energy beam is incident or on the side opposite to that side of the absorbing layer on which an energy bean is incident. In this example, it is assumed that irradiation with an energy beam is accomplished through the substrate.

The transmitting layer on the incident side is an $Sb_2Se_3$ layer, which is formed between the substrate 1 and the first absorbing layer 2. The intermediate transmitting layer is 70 nm thick. Fig. 3 shows the energy absorption rate 5 of the first absorbing layer, the energy absorption rate 6 of the second absorbing layer, and the reflectance 9 of the recording film, which vary according to the thickness of the transmitting layer formed on the incident side. It should be noted that the reflectance of the recording film changes in the range from 0% to 46%, while the ratio between the absorption rate of the first absorbing layer and the absorption rate of the second absorbing layer remains almost constant. In other words, it is possible to control the reflectance of the recording film by adjusting the thickness of the transmitting film formed on the incident side. The actually observed reflectance of the recording medium is the reflectance of the recording film plus the reflectance (4%) of the polycarbonate substrate.

Fig. 4 shows the results which are obtained when the transmitting layer is formed on the side opposite to the incident side. The transmitting layer is an $Sb_2Se_3$ layer, which is formed on the second absorbing layer 4 shown in Fig. 1A. The intermediate transmitting layer is 70 nm thick. It is noted from Fig. 4 that the ratio between the absorption rate of the first absorbing layer and the absorption rate of the second absorbing layer is 1:7, when the transmitting layer is 160 nm thick. This indicates that the ratio is greater than that in Example 1.

As mentioned above, it is possible to control the reflectance independently from the ratio of the absorption rates of the absorbing layers or to increase the ratio of the absorption rates of the absorbing layers, when the transmitting layer is formed on that side of the absorbing layer on which an energy beam is incident or on the side opposite to that side of the absorbing layer on which an energy beam is incident. Incidentally, it is also possible to form two transmitting layers on both sides of the absorbing layer.

The same effect as above is produced even when the reflecting layer or a combination of the transmitting layer and the reflecting layer is placed on the side opposite to that side of the absorbing layer on which an energy beam is incident. Especially, the reflecting film keeps the recording sensitivity high because it prevents the energy beam from penetrating the recording film. In other words, the reflecting film permits the irradiated energy beam to be used efficiently for both absorption and reflection.

It is also possible to control the ratio of absorption rate of the absorbing layers by changing the thickness of each absorbing layer. In this case, the absorbing layer for a high absorption rate should be thick and the absorbing layer for a low absorption rate should be thin. If the absorbing layer is thick, it takes time for the generated heat to diffuse into the adjacent transmitting layer, and consequently the absorbing layer heats up more. On the other hand, if the absorbing layer is thin, the generated heat rapidly diffuses into the adjacent transmitting layer, and consequently the absorbing layer heats up less.

The above-foregoing is about an information recording medium which has two energy absorbing layers; but it is also possible to design an information recording medium having three or more absorbing layers in the same manner as above.

Example 3

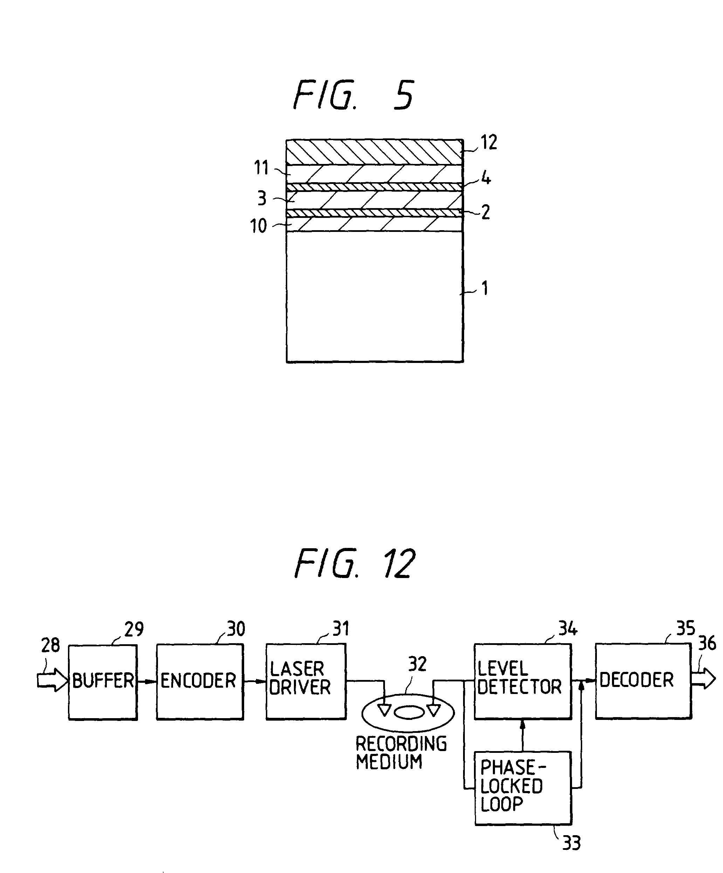

An experiment on recording and reproduction was carried using an information recording medium constructed as shown in Fig. 5. The information recording medium was prepared by forming layers of $Sb_2Se_3$, Bi, $Sb_2Se_3$, Bi, $Sb_2Se_3$, and Al consecutively by vacuum deposition on a discoid polycarbonate substrate, 1.2 mm thick and 13 cm in diameter. The $Sb_2Se_3$ layers include the transmitting layer 10 on the incident side, the intermediate transmitting layer 3, and the transmitting layer 11 on the side opposite to the incident side. The Bi layers include the first absorbing layer 2 and the second absorbing layer 4. The aluminum layer is the reflecting layer 12.

The thickness of the first absorbing layer, the second absorbing layer, and the Al reflecting layer was fixed at 5 nm, 10 nm, and 60 nm, respectively, but the thickness of the three $Sb_2Se_3$ layers was changed so that the absorption of the energy beam takes place in the first absorbing layer (disk A) or in the second absorbing layer (disk B).

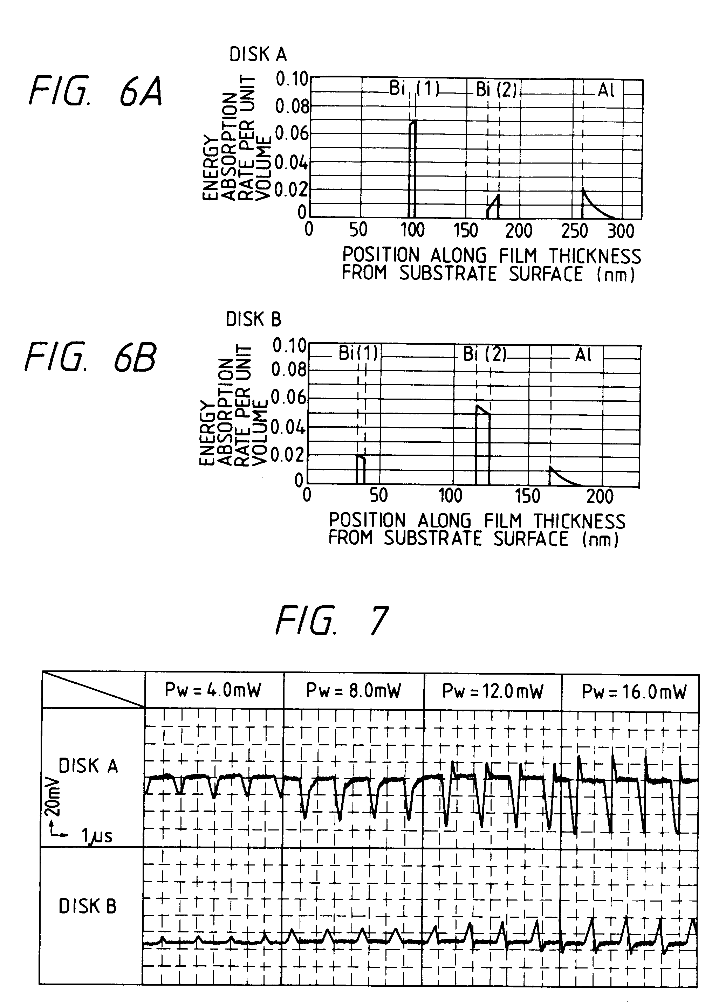

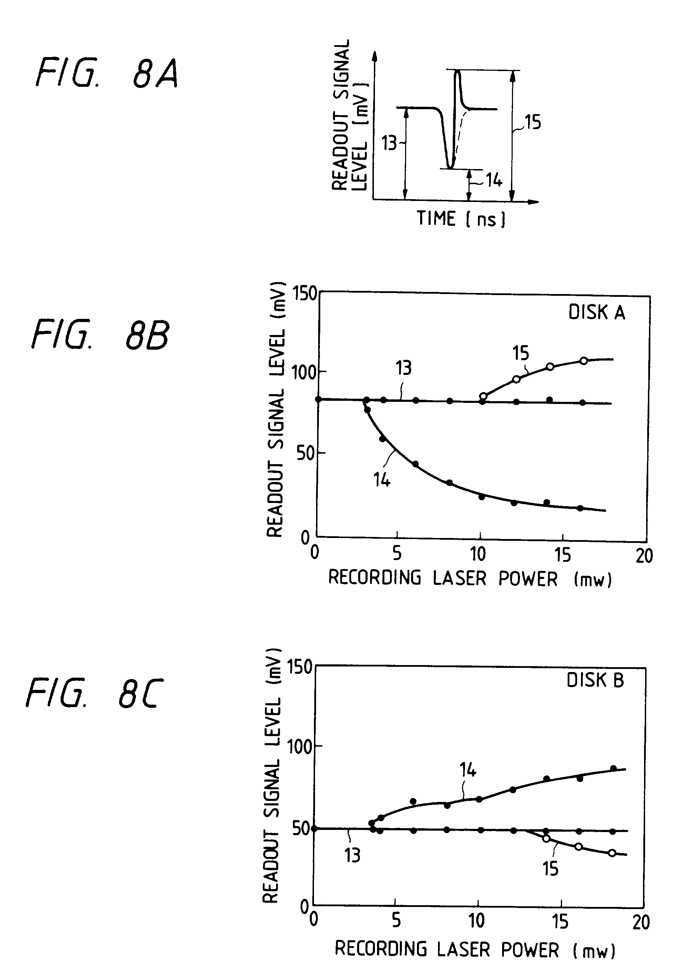

Figs. 6A and 6B show the distribution of the absorption rate of the energy beam in the recording film. (The energy beam is a laser light with a wavelength of 830 nm, and the energy beam was applied to the substrate.)

Disk A and disk B were tested for recording-reproducing characteristics using an apparatus for evaluating optical disks (which generate a laser with a wavelength of 830 nm, has a lens NA of 0.55, and turns the disk at a linear velocity of 7.7 m/s).

First, disk A and disk B were examined for the dependence of readout signals on recording power. Fig. 7 shows the dependence of the waveform of readout signals on the power of recording laser. In Fig. 7, the abscissa represents time and the ordinate represents the voltage of readout signals. In other words, the reflectance of the recording medium is represented in terms of voltage. The reproducing waveform as shown in Fig. 7 is obtained because the reflectance changes when the reproducing laser light passes through the recording pit.

The recording laser light has a pulse width of 0.5 μs, the recording dot has a cycle of 2.0 μs (frequency 0.5 MHz), and the reproducing laser light has a power of 0.8 mW.

It is noted from Fig. 7 that when the recording laser has a low power, disk A gives the downward waveform of readout signal whereas disk B gives the upward waveform of readout signal.

In the case of disk A, the downward waveform of reproducing pulse becomes gradually thin as the recording laser power is increased, and the upward waveform of reproducing pulse begins to appear at 8.0 mW. As the recording power is increased further, the differential waveform (which is a combination of the downward and upward waveforms) appears. Similarly, in the case of disk B, the downward waveform begins to appear at 12.0 mW, which changes into the differential waveform. A single reproducing pulse remains unchanged in length, and the reversal of signal voltage takes place in that pulse.

Figs. 8A, 8B, and 8C show the dependence of the readout signal level on the recording laser power. As shown in Fig. 8A, the readout signal level is defined by the readout level 13 of the unrecorded part, the readout level 14 obtained with a low recording power, and the readout level 15 obtained with a high recording power. It is noted from Figs. 8B and 8C that the readout level 14 and the readout level 15 appear over a considerably broad range of recording power.

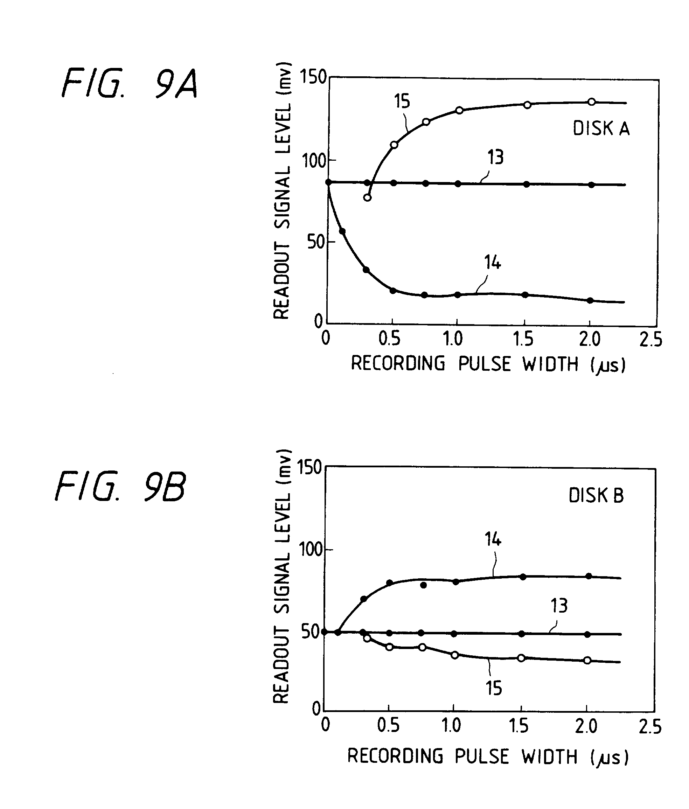

Figs. 9A and 9B show the dependence of the readout signal level on the pulse width of the recording laser. The readout levels 13, 14, and 15 are as defined in Fig. 8A. Figs. 9A and 9B show the data which were obtained when recording was performed under the same conditions as in Figs. 8B and 8C, with the recording laser power kept constant at 16 mW. It is noted from Figs. 9A and 9B that even when the pulse width of the recording laser light is changed, the readout level remains the same as in the case where the recording power is changed in Figs. 8B and 8C.

Fig. 7, Figs. 8B and 8C, and Figs. 9A and 9B show that both disk A and disk B are capable of recording and reproducing ternary information if the power or pulse width of the laser light is modulated.

In this experiment, it is shown that the readout level is proportional to the reflectance of the recording pit. Therefore, it is noted from Fig. 7, Figs. 8B and 8C, and Figs. 9A and 9B that disk A and disk B are opposite to each other in the direction in which the reflectance changes when recording is made. This suggests that not only reflectance but also phase change occur in the recording dot on the surface of the recording film and this produces the effect of multiple interference of reproducing laser light.

Recording with the recording dots which have undergone phase change provides a high degree of signal modulation because the reflected beam from the inside of the recording dot and the reflected beam from the outside of the recording dot interfere with each other even in the case where the diameter of the recording dot is smaller than that of the reproducing laser beam.

Example 4

The following explanation is about the method for recording and reproducing multi-valued information according to the present invention.

The recording of multi-valued information can be accomplished by using the different values of energy beam power, or by power modulation. For example, if the recording of ternary information is to be achieved by using the recording medium mentioned in Example 3, the power is changed to 2 mW, 8 mW, and 16 mW to record "0", "1", and "2", respectively, with the pulse width of the laser beam kept constant at 500 ns.

The recording of multi-valued information can also be accomplished by using the different pulse waveforms of an energy beam, or by the modulation of pulse width. For example, if the recording of ternary information is to be achieved by using the recording medium mentioned in Example 3, the pulse width is changed to 50 ns, 200 ns, and 500 ns to record "0", "1", and "2", respectively, with the power of the laser beam kept constant at 16 mW.

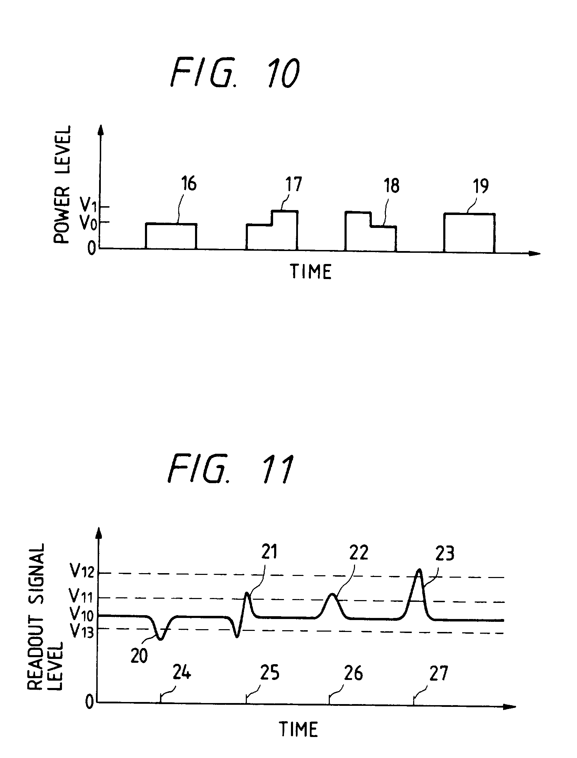

The recording can also be achieved by using the different pulse waveforms as shown in Fig. 10. The pulse waveforms indicated by reference numerals 16, 17, 18, and 19 have a power level which changes with time from $v_0$ to $v_1$ or from $v_1$ to $v_0$.

The reproduction of multi-valued information can be achieved by using the different levels of readout signals. This method consists of checking the level of readout signals at a certain timing with the level of readout signals which has previously been divided into several ranges. For example, if ternary information is to be recorded using disk A mentioned in Example 3, the level of readout signals which is greater than 60 mV and smaller than 100 mV represents "0", the level of readout signals which is smaller than 60 mV but is not greater than 100 mV represents "1", and the level of readout signals which is greater than 100 mV represents "2".

The reproduction of multi-valued information can be achieved by using the different waveform of readout signals. This method consists of checking the level of readout signals at a certain timing and also checking the waveform of readout signals with the waveform of readout signals which has previously been classified into several patterns. For example, if ternary information is to be recorded using disk A mentioned in Example 3, the level of readout signals which does not change in a certain time represents "0", the level of readout signals which changes into the lower level in a certain time represents "1", and the level of readout signals which changes into the higher level in a certain time represents "2".

The reproduction can also be achieved by using the different waveforms of readout signals as shown in Fig. 10. The waveforms of readout signals indicated by reference numerals 20, 21, 22, and 23 have a level which takes any of four values $V_{10}$, $V_{11}$, $V_{12}$, and $v_{12}$ as time goes.

The above-foregoing is about the method of recording and reproducing ternary information; but it is also possible to record and reproduce four-valued or multi-valued information in the same manner as above.

Example 5

The following explanation is about the apparatus for recording and reproducing information according to the method mentioned in Example 4.

Information was recorded on the information recording medium 32 using a recording-reproducing apparatus made up of a buffer 29, an encoder 30, and a laser driver 31. (The buffer 29 is not essential.)

The buffer receives and stores information 28 and then transfers it sequentially to the encoder, which converts the information into 4-bit binary information composed of 0's and 1's. The encoder further converts the 4-bit binary information into 6-bit binary information and converts the 6-bit binary information into 3-bit ternary information composed of 0's, 1's, and 2's according to the conversion tables as shown in Tables 1 and 2.

Table 1

| Information Number | 4-bit binary information | 6-bit binary information | | | 3-bit ternary information |
|---|---|---|---|---|---|
| 1 | 0000 | 01 | 00 | 00 | 100 |
| 2 | 0001 | 01 | 00 | 01 | 101 |
| 3 | 0010 | 01 | 00 | 10 | 102 |
| 4 | 0011 | 01 | 01 | 00 | 110 |
| 5 | 0100 | 01 | 01 | 01 | 111 |
| 6 | 0101 | 01 | 01 | 10 | 112 |
| 7 | 0110 | 01 | 10 | 00 | 120 |
| 8 | 0111 | 01 | 10 | 01 | 121 |
| 9 | 1000 | 01 | 10 | 10 | 122 |
| 10 | 1001 | 10 | 00 | 00 | 200 |
| 11 | 1010 | 10 | 00 | 01 | 201 |
| 12 | 1011 | 10 | 00 | 10 | 202 |
| 13 | 1100 | 10 | 01 | 00 | 210 |
| 14 | 1101 | 10 | 01 | 01 | 211 |
| 15 | 1110 | 10 | 01 | 10 | 212 |
| 16 | 1111 | 10 | 10 | 00 | 220 |

Table 2

| Information Number | 4-bit binary information | 6-bit binary information | | | 3-bit ternary information |
|---|---|---|---|---|---|
| 1 | 0000 | 00 | 00 | 00 | 000 |
| 2 | 0001 | 00 | 00 | 01 | 001 |
| 3 | 0010 | 00 | 01 | 00 | 010 |

Continuation of the Table on the next page

9

Table 2   (continued)

| Information Number | 4-bit binary information | 6-bit binary information | | | 3-bit ternary information |
|---|---|---|---|---|---|
| 4 | 0011 | 01 | 00 | 00 | 100 |
| 5 | 0100 | 00 | 01 | 01 | 011 |
| 6 | 0101 | 01 | 00 | 01 | 101 |
| 7 | 0110 | 01 | 01 | 00 | 110 |
| 8 | 0111 | 00 | 01 | 10 | 012 |
| 9 | 1000 | 01 | 00 | 10 | 102 |
| 10 | 1001 | 01 | 10 | 00 | 120 |
| 11 | 1010 | 00 | 10 | 01 | 021 |
| 12 | 1011 | 10 | 00 | 01 | 201 |
| 13 | 1100 | 10 | 01 | 00 | 210 |
| 14 | 1101 | 00 | 10 | 10 | 022 |
| 15 | 1110 | 10 | 00 | 10 | 202 |
| 16 | 1111 | 10 | 10 | 00 | 220 |

For example, the information number 11, which is represented by 4-bit binary information (1010), is recorded in the following manner using the conversion table given in Table 1. First, the 4-bit information (1010) is converted into the 6-bit binary information (100001). Then, the 6 bits are divided into three 2-bit groups and each 2-bit group is converted as follows: $10 \rightarrow 2$, $00 \rightarrow 0$, and $01 \rightarrow 1$. The resulting 3 bits are combined into the 3-bit ternary information (201)

Subsequently, the ternary information is transferred to the laser driver, which performs recording according to the method mentioned in Example 5. (The recording needs only 3 bits according to the ternary recording method of this invention, whereas the recording needs 4 bits according to the conventional binary recording method. This means that the recording method of the present invention achieves 1.3 times as high recording density as the conventional recording method.)

The information recording medium 32 (as mentioned in Example 4) was subjected to reproduction using an apparatus made up of a phase-lock loop 33, a level detector 34, and a decoder 35, as shown in Fig. 12.

The phase-lock loop fetches the timing by the aid of signals from prepits formed on the disk and reads the recorded ternary information using the timing and the level detector according to the reproduction method mentioned in Example 5. The ternary information is sent to the decoder, which converts the ternary information into the binary information. This process is opposite to the encoding process mentioned above.

The recording-reproducing apparatus equipped with an encoder and a laser driver can process the binary information 28 which is used by the conventional machines. Therefore, it can be easily connected to any conventional machine. In addition, the recording-reproducing apparatus equipped with a phase-locked loop, a level detector, and a decoder sends out the binary information 36 which can be processed by the conventional machines. Therefore, it can be easily connected to any conventional machine.

The encoding and decoding which are accomplished in the recording-reproducing apparatus may be designed according to the tracking system and focussing system used by the apparatus. The apparatus can also handle the conventional information recording medium for recording and reproduction, if it is provided with a conversion table which permits the recording and reproduction of binary information as well as ternary information. In this case, the conventional information recording medium may be distinguished automatically from the information recording medium of the present invention if a provision is made which detects a mark having a different reflectance, reads the information of prepits, or checks the reflectance of the unrecorded part.

Incidentally, using the conversion table shown in Table 1 offers an advantage that it is easy to find the timing of readout signals because the first bit of the 3-bit ternary information invariably starts with 1 or 2 of the ternary information. On the other hand, using the conversion table shown in Table 2 offers an advantage that it is easy to find the reference level for readout signals because the 3-bit ternary information invariably has at least one "0" of the ternary information. These advantages lead to the prevention of errors at the time of reproduction.

Other conversion tables than those given above may be used according to the information recording medium and recording-reproducing apparatus to be used. The conversion tables may be stored in a semiconductor memory such as ROM. In the above foregoing, the conversion of information was explained with reference to the 4-bit binary information; however, for the higher recording density, it is desirable to convert information composed of as many bits as possible, such as 16 bits and 32 bits. For example, 32-bit binary information can be converted into 21-bit ternary information. This increases the recording density 1.52 times.

As mentioned in detail above, the present invention provides an information recording medium which is capable of multi-valued recording. Therefore, the information recording medium has a high recording density and a large recording capacity. Moreover, the information recording medium permits the rapid transfer (recording and reading) of information. The present invention also provides an information recording and reproducing apparatus which can handle the information recording medium without the need of changing the wavelength of laser light and the numerical aperture of the lens. Therefore, the apparatus is simple in structure and of great practical use.

**Claims**

1. An information recording system comprising an information recording medium and an energy beam, the information recording medium (32) being capable of information recording and reproduction upon irradiation with an energy beam, the medium comprising

    two or more energy beam absorbing layers (2, 4) which are formed at different positions across the thickness of the medium, said energy beam absorbing layers (2, 4) recording information according to their respective absorptions, and the absorbing layers (2, 4) holding an energy beam transmitting layer (3) between them,

    **characterized** in that

    the absorbing layers (2, 4) and the transmitting layer (3) are formed within the depth of focus of the energy beam.

2. A system (32) according to claim 1,
    characterized by
    an further energy beam transmitting layer (10,11) in the medium formed on the side on which the energy beam is incident or on the side opposite to the side on which the energy beam is incident.

3. A system (32) according to claim 1 or 3,
    characterized in that in the medium
    the absorbing layers (2, 4) are arranged such that the adjacent absorbing layers differ in energy absorption.

4. A system (32) according to one of the claims 1 to 3,
    characterized by
    a plurality of absorbing layers (2, 4) in the medium which differ in melting point or crystallization temperature.

5. A system (32) according to one of the claims 1 to 4,
    characterized by
    an energy beam reflecting layer (12) in the medium formed on the side opposite to that side of the recording film on which the energy beam is incident.

6. A system (32) according to one of the claims 1 to 5
    characterized in that in the medium
    the energy beam transmitting layer has a thickness d defined by
    $$\lambda/(4n) \leq d \leq 2\lambda/n,$$
    where $\lambda$ denotes the wavelength of the incident energy beam and n denotes the refractive index of the energy beam transmitting layer.

7. A system (32) according to one of the claims 1 to 6,
    characterized in that in the medium
    the absorbing layer (2, 4) contains at least one element selected from Se, Te, As, Sb and Ge, Bi, Sn, Pb, Al, Ga, In and Tl.

8. A system (32) according to one of the claims 1 to 7,
    characterized in that in the medium
    the transmitting layer is made of a dielectric material which is at least one kind selected from oxides, nitrides, sulfides, selenides and carbides.

9. A method for recording and reproducing information by applying an energy beam to an information recording medium (32) having two or more energy beam absorbing layers (2, 4) which are formed at different positions across the thickness of the medium, said energy beam absorbing layers (2, 4) holding an energy beam transmitting layer (3) between them, wherein

the information recording is accomplished in response to the energy beam power which varies or the pulse waveform which varies, or both,

**characterized** in that

the absorbing layers and the transmitting layer are formed within the depth of focus of the energy beam.

10. A method according to claim 9,
characterized in that
the change is made at different positions in the direction across the thickness of the recording film.

11. A method according to claim 9 or 10,
characterized in that
the change is made in different modes of the recording film.

12. A method according to one of the claims 9 to 11,
characterized in that
the information reproduction is accomplished by dividing the level of readout signals into three or more different zones so that the individual zones correspond to three or more values of information.

13. A method according to one of the claims 9 to 12,
characterized in that
the information reproduction is accomplished by dividing the waveform of readout signals into three or more different patterns so that the individual patterns correspond to three or more values of information.

14. An apparatus for recording information, by applying an energy beam to

an information recording medium (32) according to one of the claims 1 to 8, comprising

means (30) to encode binary recording signals into ternary or multi-valued signals, and

means (31) to change the power or pulse width or both of the irradiating energy beam in accordance with the multi-valued recording signals.

15. An apparatus according to claim 14,
characterized by
means to detect the level of the readout signals, means to generate timing for the detection of the level or readout signals, and means to reproduce ternary or multi-valued signals and decode the multi-valued signals into binary signals.

**Patentansprüche**

1. Informationsaufzeichnungssystem mit einem Informationsaufzeichnungsmedium und einem Energiestrahl, wobei das Informationsaufzeichnungsmedium (32) dazu in der Lage ist, auf die Bestrahlung mit einem Energiestrahl hin Information aufzuzeichnen und wiederzugeben, wobei das Medium aufweist
zwei oder mehr Energiestrahlen absorbierende Schichten (2, 4), die über die Dicke des Mediums an unterschiedlichen Positionen ausgebildet sind, wobei die einen Energiestrahl absorbierenden Schichten (2, 4) Information entsprechend ihren jeweiligen Absorptionen aufzeichnen, und wobei die absorbierenden Schichten (2, 4) zwischen sich eine den Energiestrahl weiterleitende Schicht (3) halten,
dadurch gekennzeichnet, daß

die absorbierenden Schichten (2, 4) und die weiterleitende Schicht (3) innerhalb des Tiefenschärfenbereichs des Energiestrahls ausgebildet sind.

2. System (32) nach Anspruch 1, gekennzeichnet durch eine weitere den Energiestrahl weiterleitende Schicht (10, 11) im Medium, die auf der Seite ausgebildet ist, auf der der Energiestrahl einfällt, oder auf der Seite, die der Seite gegenüberliegt, auf der der Energiestrahl einfällt.

3. System (32) nach Anspruch 1 oder 2, dadurch gekennzeichnet, daß im Medium die absorbierenden Schichten (2, 4) so angeordnet sind, daß sich nebeneinanderliegende absorbierende Schichten in ihrer Energieabsorption unterscheiden.

4. System (32) nach einem der Ansprüche 1 bis 3, gekennzeichnet durch mehrere absorbierende Schichten (2, 4) im Medium, die sich hinsichtlich ihres Schmelzpunkts oder ihrer Kristallisationstemperatur unterscheiden.

5. System (32) nach einem der Ansprüche 1 bis 4, gekennzeichnet durch eine den Energiestrahl reflektierende Schicht (12) im Medium, die auf der Seite ausgebildet ist, die derjenigen Seite der aufzeichnenden Schicht gegenüberliegt, auf die der Energiestrahl einfällt.

6. System (32) nach einem der Ansprüche 1 bis 5, dadurch gekennzeichnet, daß im Medium die den Energiestrahl weiterleitende Schicht eine Dicke (d) hat, die gegeben ist durch
$$\lambda/(4n) \leq d \leq 2\lambda/n,$$
wobei $\lambda$ die Wellenlänge des einfallenden Energiestrahls ist und n die Brechzahl der den Energiestrahl weiterleitenden Schicht.

7. System (32) nach einem der Ansprüche 1 bis 6, dadurch gekennzeichnet, daß im Medium die absorbierende Schicht (2, 4) zumindest ein aus Se, Te, As, Sb und Ge, Bi, Sn, Pb, Al, Ga, In und Tl ausgewähltes Element enthält.

8. System (32) nach einem der Ansprüche 1 bis 7, dadurch gekennzeichnet, daß im Medium die weiterleitende Schicht zumindest eine Art ausgewählt aus Oxiden, Nitriden, Sulfiden, Seleniden und Carbiden ist.

9. Verfahren zum Aufzeichnen und Wiedergeben von Information durch Anlegen eines Energiestrahls an ein Informationsaufzeichnungsmedium (32), das zwei oder mehr den Energeistrahl absorbierende Schichten (2, 4) hat, die über die Dicke des Mediums an unterschiedlichen Positionen ausgebildet sind, wobei die den Energiestrahl absorbierenden Schichten (2, 4) zwischen sich eine den Energiestrahl weiterleitende Schicht (3) halten, wobei die Informationsaufzeichnung nach Maßgabe der veränderlichen Energiestrahlleistung oder der veränderlichen Impulswellenform oder beider erreicht wird, dadurch gekennzeichnet, daß die absorbierenden Schichten und die weiterleitende Schicht innerhalb des Tiefenschärfenbereichs des Energiestrahls ausgebildet sind.

10. Verfahren nach Anspruch 9, dadurch gekennzeichnet, daß die Änderung an unterschiedlichen Positionen in Richtung längs der Dicke der Aufzeichnungsschicht gemacht wird.

11. Verfahren nach Anspruch 9 oder 10, dadurch gekennzeichnet, daß die Änderung in verschiedenen Moden der Aufzeichnungsschicht gemacht wird.

12. Verfahren nach einem der Ansprüche 9 bis 11, dadurch gekennzeichnet, daß die Informationswiedergabe dadurch erreicht wird, daß der Pegel des ausgelesenen Signals in drei oder mehr unterschiedliche Bereiche unterteilt wird, so daß die einzelnen Bereiche drei oder mehr Werten von Information entsprechen.

13. Verfahren nach einem der Ansprüche 9 bis 12, dadurch gekennzeichnet, daß die Informationswiedergabe dadurch erreicht wird, daß die Wellenform des ausgelesenen Signals in drei oder mehr unterschiedliche Muster unterteilt wird, so daß die einzelnen Muster drei oder mehr Werten von Information entsprechen.

14. Vorrichtung zum Aufzeichnen von Information durch Anlegen eines Energiestrahls an ein Informationsaufzeichnungsmedium (32) gemäß einem der Ansprüche 1 bis 8, mit

- einer Einrichtung (30) um binäre Aufzeichnungssignale in ternäre oder mehrwertige Signale zu codieren, und
- einer Einrichtung (31) zur Änderung der Leistung oder der Impulsbreite oder beider des bestrahlenden Energiestrahls entsprechend dem mehrwertigen Aufzeichnungssignal.

15. Vorrichtung nach Anspruch 14, gekennzeichnet durch eine Einrichtung zur Erfassung des Pegels der ausgelesenen Signale, einer Einrichtung zur Festlegung des Zeitpunkts für die Erfassung des Pegels oder der ausgelesenen Signale, und einer Einrichtung zum Wiedergeben ternärer oder mehrwertiger Signale und zum Decodieren der mehrwertigen Signale in binäre Signale.

**Revendications**

1. Système d'enregistrement d'information comportant un support d'enregistrement d'information et un faisceau d'énergie, le support d'enregistrement d'information (32) étant capable d'enregistrer et de reproduire une information par irradiation avec un faisceau d'énergie, le support comprenant

   deux ou plus couches d'absorption de faisceau d'énergie (2, 4) formées en différentes positions dans l'épaisseur du support, lesdites couches d'absorption de faisceau (2, 4) enregistrant l'information selon leurs absorptions respectives, et les couches d'absorption (2, 4) maintenant une couche de transmission de faisceau d'énergie (3) entre elles,

   caractérisé en ce que les couches d'absorption (2, 4) et la couche de transmission (3) sont formées à l'intérieur de la profondeur de foyer du faisceau d'énergie.

2. Système (32) selon la revendication 1, caractérisé par une autre couche de transmission de faisceau d'énergie (10, 11) dans le support formée sur le côté sur lequel le faisceau d'énergie est incident ou sur le côté opposé au côté sur lequel le faisceau d'énergie est incident.

3. Système (32) selon la revendication 1 ou 2, caractérisé en ce que dans le support, les couches d'absorption (2, 4) sont agencées de sorte que les couches d'absorption adjacentes présentent une absorption d'énergie différente.

4. Système (32) selon l'une des revendications 1 à 3, caractérisé en ce qu'une pluralité de couches d'absorption (2, 4) dans le support présentent un le point de fusion ou une température de cristallisation différents.

5. Système (32) selon l'une des revendications 1 à 4, caractérisé en ce qu'une couche réfléchissant le faisceau d'énergie (12) dans le support est formée sur le côté opposé au côté d'enregistrement du film sur lequel le faisceau d'énergie est incident.

6. Système (32) selon l'une des revendications 1 à 5, caractérisé en ce que dans le support la couche de transmission de faisceau d'énergie possède une épaisseur d définie par

$$\lambda/(4n) \leq d \leq 2\lambda/n,$$

   où $\lambda$ désigne la longueur d'onde du faisceau d'énergie incident et n désigne l'indice de réfraction de la couche de transmission de faisceau d'énergie.

7. Système (32) selon l'une des revendications 1 à 6, caractérisé en ce que dans le support, la couche d'absorption (2, 4) contient au moins un élément choisi parmi Se, Te, As, Sb, et Ge, Bi, Sn, Pb, Al, Ga, In et Tl.

8. Système (32) selon l'une des revendications 1 à 7, caractérisé en ce que dans le support, la couche de transmission est constituée d'un matériau diélectrique qui est au moins l'un choisi parmi des oxydes, des nitrures, des sulfures, des séléniures et des carbures.

9. Procédé d'enregistrement et de reproduction d'information par application d'un faisceau d'énergie à un support d'enregistrement d'information (32) possédant deux couches ou plus d'absorption de faisceau d'énergie (2, 4) qui sont formées en des positions différentes dans l'épaisseur du support, lesdites couches d'absorption de faisceau d'énergie (2, 4) maintenant une couche de transmission de faisceau d'énergie (3) entre elles, dans lequel

   l'enregistrement de l'information est effectué en réponse à la puissance variable du faisceau d'énergie ou à la forme d'onde variable d'impulsion ou aux deux, caractérisé en ce que les couches d'absorption et la couche de transmission sont formées à l'intérieur de la profondeur de foyer du faisceau d'énergie.

10. Procédé selon la revendication 9, caractérisé en ce que la variation est effectuée en différentes positions dans le sens de l'épaisseur de la pellicule d'enregistrement.

11. Procédé selon la revendication 9 ou 10, caractérisé en ce que la variation est effectuée en différents modes de la pellicule d'enregistrement.

12. Procédé selon l'une des revendications 9 à 11, caractérisé en ce que la reproduction de l'information est effectuée en divisant le niveau des signaux lus dans les trois zones différentes ou plus de sorte que les zones individuelles correspondent aux trois valeurs ou plus de l'information.

13. Procédé selon l'une des revendications 9 à 12, caractérisé en ce que la reproduction de l'information est accomplie en séparant la forme d'onde des signaux lus en trois modèles différents ou plus de sorte que les modèles individuels correspondent à trois valeurs ou plus de l'information.

14. Dispositif d'enregistrement d'information en appliquant un faisceau d'énergie à un support d'enregistrement d'information (32) selon l'une des revendications 1 à 8, comportant

des moyens (30) pour coder des signaux d'enregistrement binaires en signaux ternaires ou à valeurs multiples, et

des moyens (31) pour modifier la puissance ou la largeur d'impulsion ou les deux du faisceau d'énergie rayonné selon les signaux d'enregistrement à valeurs multiples.

15. Dispositif selon la revendication 14, caractérisé en ce qu'il comporte des moyens pour détecter le niveau des signaux lus, des moyens de synchronisation pour la détection du niveau des signaux lus, et des moyens pour reproduire des signaux ternaires ou à valeurs multiples et décoder les signaux à valeurs multiples en signaux binaires.□

## FIG. 1A    FIG. 1B    FIG. 1C

POSITION ALONG FILM THICKNESS

POSITION ALONG FILM THICKNESS

ENERGY ABSORPTION RATE PER UNIT VOLUME

ENERGY ABSORPTION RATE PER UNIT VOLUME

## FIG. 2

INTERMEDIATE TRANSPARENT LAYER THICKNESS (nm)

ABSORPTION RATE (%)

# FIG. 3

# FIG. 4

EP 0 432 731 B1

*FIG. 5*

*FIG. 12*

18

FIG. 6A

DISK A

FIG. 6B

DISK B

FIG. 7

FIG. 8A

FIG. 8B

FIG. 8C

FIG. 9A

FIG. 9B

## FIG. 10

## FIG. 11